# EUROPÄISCHE PATENTSCHRIFT

(11) **EP 1 174 317 B1**
(45) Veröffentlichungstag und Bekanntmachung des Hinweises auf die Patenterteilung: **22.12.2004**
(21) Anmeldenummer: 01117238.4
(22) Anmeldetag: 17.07.2001
(51) Int. Cl.: B60S 9/04, B60S 9/06

(54) **Stützeinrichtung für Fahrzeuge**
Supporting device for vehicles
Dispositif de support de véhicules

(30) Priorität: 18.07.2000 DE 20012427 U
(43) Veröffentlichungstag der Anmeldung: 23.01.2002
(73) Patentinhaber: AL-KO KOBER AG, D-89359 Kötz (DE)
(72) Erfinder: Beck, Gerhard, Dipl.-Ing.(FH), 89343 Jettingen-Scheppach (DE)
(74) Vertreter: Ernicke, Klaus Stefan

(56) Entgegenhaltungen:
- DE-A- 3 306 789
- GB-A- 2 207 102
- US-A- 5 137 301

## Beschreibung

Die Erfindung betrifft eine Stützeinrichtung für Fahrzeuge mit den Merkmalen im Oberbegriff des Hauptanspruchs.

Konventionelle Stützeinrichtungen von Fahrzeuganhängern, insbesondere Wohnwagen, bestehen aus einer Schwenkstütze und einem Stützenantrieb, der meist als Spindelantrieb ausgebildet ist. Die unter dem Fahrzeugboden montierte Schwenkstütze wird mit dem Spindelantrieb nach unten gedreht, bis sie Kontakt mit dem Untergrund hat. Anschließend wird die Schwenkstütze noch etwas weiter geschwenkt, bis die Fahrzeugräder entlastet sind und das Fahrzeuggewicht sich auf den meist vier Schwenkstützen verteilt. Bei Schwenkstützen besteht das Problem, dass die Aufstandsfläche der meist mit einer gebogenen Gleitkufe versehenen Stützenunterseite relativ klein ist. Außerdem sollte die Gleitkufe auf dem Untergrund bei der Hebebewegung und Entlastung der Fahrzeugräder ein Stück translatorisch gleiten, was je nach Beschaffenheit des Untergrundes zu Reibungsproblemen und einem entsprechend höheren Kraftaufwand beim Kurbeln der Spindel führt.

Eine Stützeinrichtung mit den Merkmalen im Oberbegriff des Hauptanspruchs ist aus der DE 33 06 789 A bekannt. Sie besteht aus einer Schwenkstütze und einem Stützenantrieb. An der Unterseite der Schwenkstütze ist ein Stützteller mittels eines Befestigungsstiftes mehrachsig frei beweglich angeordnet. Der Stützteller kann sich gegenüber der Schwenkstütze nach oben und unten sowie vor und zurück frei hin- und herbewegen und außerdem um den Befestigungsstift drehen. Er hat dadurch keine definierte Lage an der Schwenkstütze. Zur Aufnahme des Befestigungsstiftes haben sowohl die Schwenkstütze, wie auch der Stützteller Aufnahmeelemente mit einer Öffnung oder Lochung, die wesentlich größer als der Durchmesser des Befestigungsstiftes sind und die den dort gewünschten Bewegungsspielraum geben. Die undefinierte Lagerung des Stütztellers hat den Nachteil, dass sich die Lage des Stütztellers nach der Schrägstellung der Schwenkstütze richtet, so dass bei steileren Stützenneigungen fast kein Verschiebeweg mehr zwischen Schwenkstütze und Stützteller besteht. Durch die große Aufstandsfläche des Stütztellers ist dann der Haftwiderstand am Boden so groß, dass die Schwenkstütze nicht mehr ganz ausgekurbelt werden kann. Andererseits sorgt die undefinierte Lagerung bei eingeklappter Schwenkstütze außerdem für unerwünschte Klappergeräusche bei der Fahrt. Dem soll durch Kunststoff als Tellerwerkstoff entgegengewirkt werden.

Die GB 2 207 102 A zeigt eine Hubstütze für Sattelauflieger, bei der die Zustellung linear erfolgt. Bei geänderten Umgebungsbedingungen des abgestellten Sattelaufliegers, wie Druckverlust in der Federung oder Beladung des Anhängers, soll eine nachträgliche Längsbewegung des Sattelaufliegers trotz ausgefahrener Hubstütze möglich sein. Zu diesem Zweck ist an der Unterseite der Hubstütze ein Stützschuh beweglich gelagert. Federn sichern den Kontakt zwischen der Hubstütze und dem Stützschuh beim Heben und Senken der Hubstütze. Der Sattelauflieger kann sich mitsamt der Hubstütze bei Bedarf gegenüber dem am Boden fest liegenden Stützschuh bewegen. Das Lager ist entweder ein von zwei seitlichen Lenkern gebildetes reines Schwenklager, das nicht translatorisch verschieblich ist oder ein translatorisches Gleitlager mit ebenen Kontaktflächen. Beim Schwenklager führt die Hubstütze bei einem Ortsversatz eine Bogenbewegung aus, die eine nach oben gerichtete vertikale Komponente hat, wobei durch die Lenker nur zwei stabile Endlagen erreichbar sind.

Zwischenpositionen können nicht stabil eingenommen werden.

Es ist Aufgabe der vorliegenden Erfindung, eine bessere Stützeinrichtung aufzuzeigen.

Die Erfindung löst diese Aufgabe mit den Merkmalen im Hauptanspruch.
Der an der Stützenunterseite angeordnete bewegliche Schwenkteller hat mehrere Vorteile. Einerseits vergrößert er die Aufstandsfläche der Schwenkstütze auf dem Untergrund, was bei weichen und weniger tragfähigen Böden günstig ist. Außerdem kann der Stützteller die Gleitbewegung der Schwenkstütze erleichtern und dementsprechend die für die Betätigung der Stützeinrichtung erforderlichen Antriebskräfte reduzieren.

Für die Gleitverbesserung ist es vorteilhaft, wenn der Stützteller drehbar und verschieblich an der Schwenkstütze gelagert ist, so dass eine gleitende Relativbewegung zwischen Stützteller und Schwenkstütze stattfinden kann. Durch die drehbare Lagerung kann der Stützteller in Ruhestellung der Stützeinrichtung angeklappt und platzsparend untergebracht werden. Hierfür ist zusätzlich ein Betätigungsorgan, vorzugsweise eine Feder, vorhanden, das für eine Lagekontrolle des Stütztellers sorgt.

Der Stützteller kann einen Boden mit günstiger Beschaffenheit für die Gleiterleichterung aufweisen. Die Bodeninnenseite ist dabei als reibarme Gleitfläche für die Schwenkstütze ausgebildet, während die Bodenaußenseite haftverbessernde Eigenschaften hat und sich am Untergrund fest krallt.

Die erfindungsgemäße Stützeinrichtung kann für beliebige Fahrzeuge eingesetzt werden, wobei sie neben der Schwenkstütze auch noch weitere Teile, z. B. ein oder mehrere Streben aufweisen kann. Ein bevorzugter Einsatzbereich besteht bei Fahrzeuganhängern, insbesondere Wohnwagen, Pritschenanhängern oder dergleichen Anhängern mit einer vorzugsweisen starren V-Deichsel oder Rohrdeichsel. Vorteile ergeben sich auch für andere Fahrzeuge, insbesondere für Kraftfahrzeuge. Ein weiterer bevorzugter Einsatzbereich liegt bei Wohnmobilen, Verkaufsfahrzeugen und dergleichen anderen Fahrzeugen, bei denen die Stützeinrichtung im Stand für eine sichere und gleichmäßige Abstützung sorgt.

In den Unteransprüchen sind andere vorteilhafte Ausgestaltungen der Erfindung angegeben.

Die Erfindung ist in den Zeichnungen beispielsweise und schematisch dargestellt. Im einzelnen zeigen:
- Figur 1:: eine Stützeinrichtung in drei Betriebsstellungen in Seitenansicht,
- Figur 2 und 3:: eine andere Darstellung der Betriebsstellungen von Figur 1,
- Figur 4:: eine vergrößerte Seitenansicht der Stützeinrichtung in Ruhestellung,
- Figur 5:: eine vergrößerte Seitenansicht der Stützeinrichtung in Auflage- bzw. Hebestellung und
- Figur 6:: eine Stirnansicht des unteren Teils der Stützeinrichtung gemäß Pfeil VI von Figur 5.

In den Zeichnungen ist eine Stützeinrichtung (1) für Fahrzeuge dargestellt, die vorzugsweise als sogenannte Ausdrehstütze ausgebildet ist. Sie besteht aus einer Schwenkstütze (3) mit einem Stützenantrieb (5) und einem beweglich an der Unterseite (9) der Schwenkstütze (3) gelagerten Stützteller (6).

Die Stützeinrichtung (1) ist vorzugsweise an der Unterseite des Fahrzeugbodens (2) montiert. Sie kann aber auch an einer beliebig anderen Stelle befestigt sein. Bei dem Fahrzeug handelt es sich vorzugsweise um einen Fahrzeuganhänger, insbesondere einen Wohnwagen oder einen Anhänger mit Kasten- oder Pritschenaufbau. Dieser ist vorzugsweise mit einer starren Baudeichsel oder Rohrdeichsel ausgerüstet und hat ein oder zwei Achsen.

Alternativ kann die Stützeinrichtung (1) auch an einem Kraftfahrzeug, vorzugsweise einem Wohnmobil oder einem Verkaufsfahrzeug montiert sein. Ansonsten ist ein Einsatz auch in Verbindung mit beliebigen anderen Fahrzeugen möglich. Die Stützeinrichtung (1) ist üblicherweise mehrfach vorhanden. Ein Wohnwagen oder ein Wohnmobil hat z.B. vier der gezeigten und nachfolgend beschriebenen Stützeinrichtungen (1).

Der Stützenantrieb (5) kann beliebig ausgebildet sein. In der gezeigten Ausführungsform ist er als Spindelantrieb gestaltet und besitzt eine Spindel (11) mit einem rückseitigen Sechskant (12) und eine Spindelmutter (13), an der eine Strebe (4) mittels eines Strebenlagers (4) gelenkig gelagert ist. Die Strebe (4) ist mit der Schwenkstütze (3) über ein Gelenk (8) am anderen Ende drehbar verbunden. Bei der Spindelbewegung wird die Spindelmutter (13) vor- und zurückbewegt, wobei die Strebe (4) entsprechend abwärts bewegt wird und die Antriebskräfte auf die Schwenkstütze (3) überträgt. Die Spindel (11) ist hierbei in geeigneter Weise drehbar gelagert. Die Schwenkstütze (3) besitzt am oberen Ende ein Schwenklager (7), an dem vorzugsweise auch die Spindel (11) abgestützt ist. Die Schwenkstütze (3) und/oder die Strebe (4) können aus ein oder mehreren Armen bestehen und eine beliebige Gestalt haben.

In einer alternativen und nicht dargestellten Ausführungsform kann die Schwenkstütze (3) auch direkt mit dem Stützenantrieb (5) verbunden sein und von diesem unmittelbar betätigt werden. Sie ist dann mit ihrem Schwenklager (7) an der Spindelmutter (13) gelenkig gelagert, wobei über die Strebe (4) und das Gelenk (8) die Gegenlagerung gebildet wird.

Der Stützenantrieb (5) kann ebenfalls in beliebiger Weise variieren. In der gezeigten Ausführungsform ist der Spindeltrieb für die manuelle Betätigung mit einer Handkurbel vorgesehen. Alternativ kann auch ein elektromotorischer Antrieb oder ein beliebig anders gearteter Antrieb vorhanden sein. Anstelle des gezeigten Spindeltriebes kann ferner eine beliebig andere Art von manuellem oder maschinellem Antrieb mit beliebigen Energiequellen eingesetzt werden.

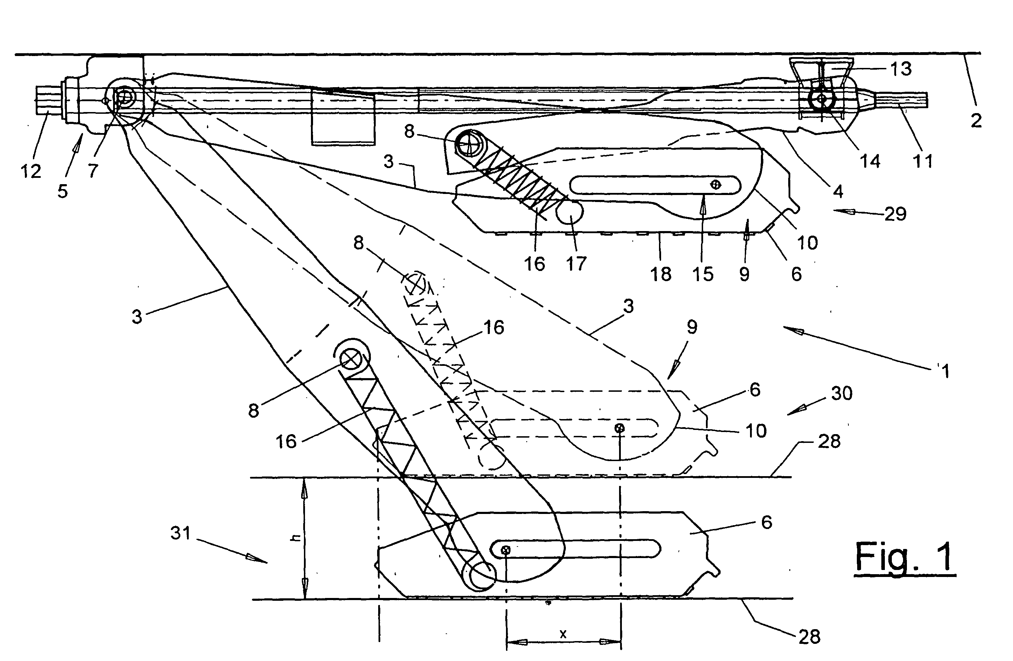

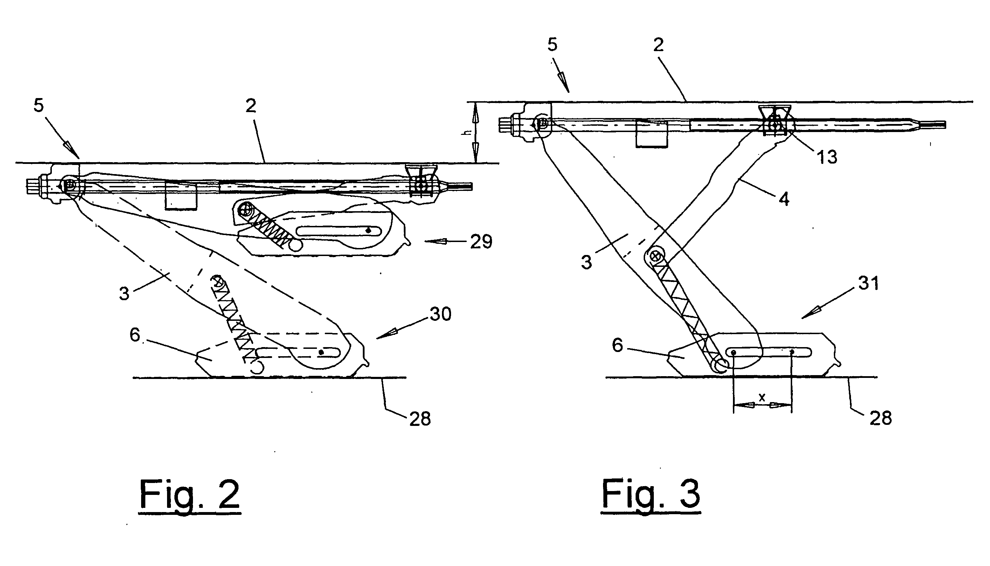

Die Schwenkstütze (3) wird zum Abstützen und ggf. auch Anheben des Fahrzeuges mittels des Stützenantriebes (5) aus der in Figur 1, 2 und 4 gezeigten Ruhestellung (29) nach unten gedreht, wobei sie um ihr Schwenklager (7) mit horizontaler Achse dreht. In der Ruhestellung ist die Schwenkstütze (3) weitgehend an den Fahrzeugboden (2) bzw. den Stützenantrieb (5) angeklappt. Im Verlauf der Schwenkbewegung kommt die Schwenkstütze (3) in Kontakt mit dem Untergrund (28). Diese Auflagestellung ist in Figur 1 im mittleren Bereich zu sehen und wird mit gestrichelten Linien verdeutlicht. Figur 2 zeigt die Auflagestellung (30) ebenfalls. Bei einer weiteren Betätigung des Stützenantriebes (5) wird das Fahrzeug angehoben, wobei sich die Schwenkstütze (3) am Untergrund (28) abstützt. Diese Hebestellung (31) ist in Figur 3 verdeutlicht. Figur 1 zeigt sie ebenfalls im unteren Bereich, wobei zur Übersicht und der nachstehenden Erläuterung wegen in Figur 1 der Untergrund (28) in verschiedenen Ebenen dargestellt ist. Die Hebestellung (31) wird mit durchgezogenen Strichen verdeutlicht.

Der Stützteller (6) ist nach Art eines Stützschuhes ausgebildet und besitzt zumindest einen Tellerboden (18) und ein geeignetes Tellerlager (15) zur Verbindung mit der Unterseite (9) der Schwenkstütze (3). Das Tellerlager (15) ist als kombiniertes Dreh- und Schiebelager ausgebildet, wodurch sich die Schwenkstütze (3) und der Stützteller (6) in genau bestimmbaren Bewegungen und Freiheitsgraden relativ zueinander verdrehen und verschieben können. Die Schieberichtung ist vorzugsweise im wesentlichen parallel zum Tellerboden (18) ausgerichtet. Sie kann alternativ auch anders ausgerichtet oder ausgebildet sein und z.B. in einer Kurvenbahn verlaufen.

Das Tellerlager (15) besteht in der gezeigten Ausführungsform aus einem quer verlaufenden Lagerbolzen (20), der an der Unterseite (9) der Schwenkstütze (3) fest montiert ist und seitlich über die Stützenwände vorsteht. Er kann rechts und links außen mit Anschlägen gesichert sein. Der Stützteller (6) besitzt auf beiden Seiten vertikale Seitenwände (19) mit jeweils einer Führung (21) für den Lagerbolzen (20). Die Führung (21) ist vorzugsweise formschlüssig und als längs des Bodens (18) ausgerichtetes gerades Langloch ausgebildet. Im Langloch oder Schlitz ist der Lagerbolzen (20) exakt in Längsrichtung verschiebbar geführt und kann sich lediglich drehen. Der Lagerbolzen (20) kann jedoch vorzugsweise keine unkontrollierten Bewegungen quer zum Langloch nach oben oder unten ausführen. Auch ein Schrägstellen oder Verkanten des Lagerbolzens (20) in der Führung (21) wird auch geeignete Weise verhindert. Die Führung (21) kann hiervon abweichend auch eine beliebige andere geeignete Gestalt und Richtung haben.

Der Stützteller (6) weist ferner mindestens ein Betätigungsorgan (16) auf, welches den Stützteller (6) in der angeklappten Ruhestellung und beim Absenken in einer definierten Lage ausrichtet und positioniert. Durch die Lagekontrolle werden einerseits beim Absenken die nachfolgend beschriebene Funktion der Gleithilfe und der erforderlich Gleitweg sichergestellt. Zum anderen werden unkontrollierte Bewegungen und ein Klappern in der Ruhestellung vermieden. Das Betätigungsorgan (16) verbindet vorzugsweise den Stützteller (6) mit der Schwenkstütze (3).

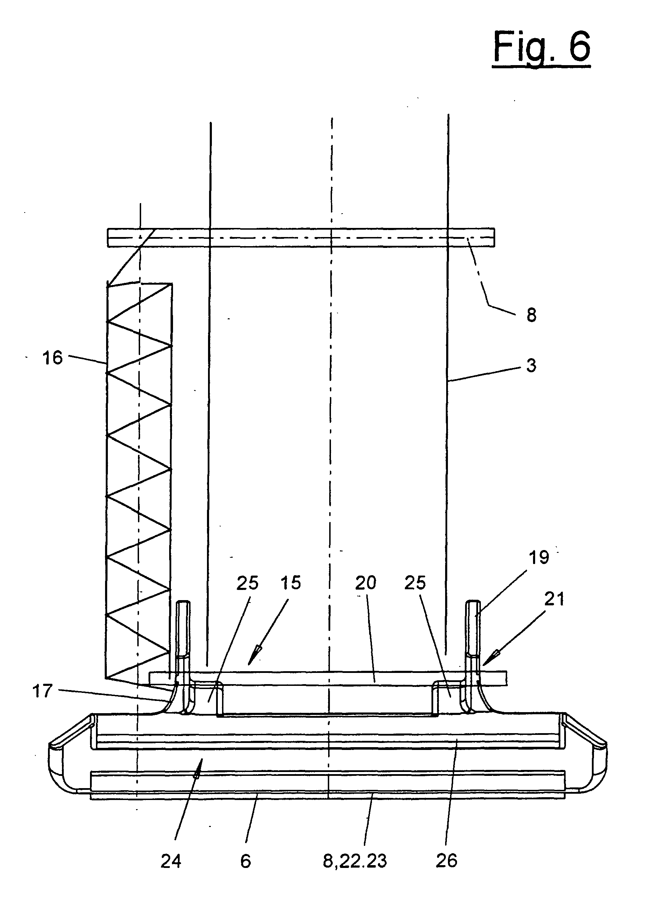

Das Betätigungsorgan (16) ist in der bevorzugten Ausführungsform als Feder, insbesondere als Zugfeder ausgebildet. Die Feder (16) ist einerseits im Bereich der Schwenkstütze (3) am Gelenkbolzen des Verbindungsgelenkes (8) zur Strebe (4) eingehängt. Am anderen Ende ist die Feder (16) mit einem vorzugsweise stationären Federanschluss (17) am Stützteller (6) verbunden. Wie Figur 6 verdeutlicht, erstreckt sich die Feder (16) vorzugsweise außenseitig an der Schwenkstütze (3) entlang. In Abwandlung der gezeigten Ausführungsform kann die Feder (16) auch doppelt vorhanden und an beiden Stützenseiten angeordnet sein.

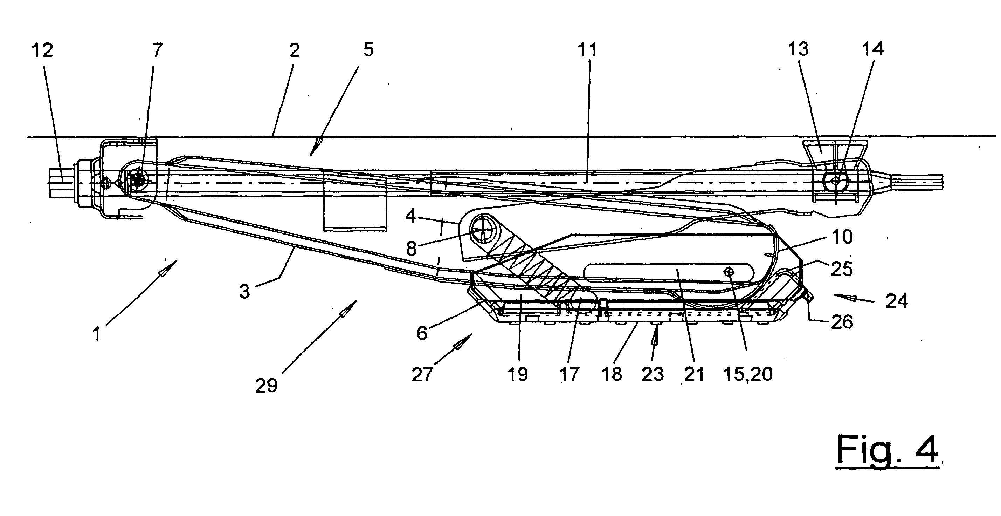

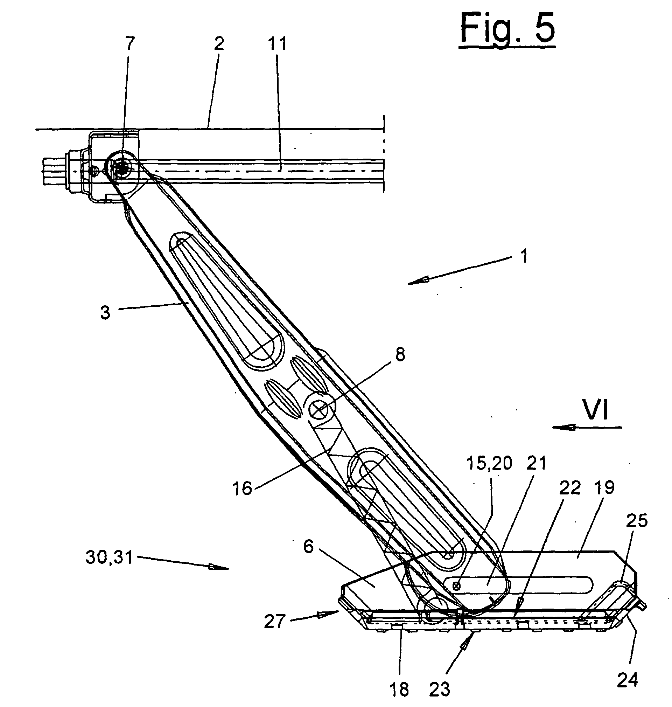

Der in Figur 4 bis 6 näher dargestellte Stützteller (6) besitzt an der Vorderseite (24) vorzugsweise eine schräge und vom Boden (18) ausgehende Vorderwand. Hier kann auch ein Anschlag (25) für die Unterseite (9) des Schwenkbügels (3) vorhanden sein. Der Schwenkbügel (3) hat an dieser Stelle vorzugsweise eine gebogene Gleitkufe (10), welche in Ruhestellung (29) am Anschlag (25)-anliegt und über die Feder (16) in dieser Stellung gehalten wird. Der Anschlag (25) kann als massives Bauteil ausgebildet sein oder aus zwei parallelen Bügeln an den Seitenwänden (19) bestehen. An der Vorderwand (24) kann außerdem ein nach außen schräg vorstehender, leistenförmiger Sporn (26) vorhanden sein. An der Rückseite (27) kann der Stützteller (6) offen sein. Alternativ kann auch hier eine niedrige Querwand vorhanden sein.

Der Tellerboden (18) besitzt an der Innenseite (22) eine reibungsarme Gleitfläche, auf der die Schwenkstütze (3) mit ihrer Gleitkufe (10) beim Übergang zwischen der Auflagestellung (30) und der Hebestellung (31) entlanggleiten kann. Die Außenseite (23) des Tellerbodens (18) ist als Haftfläche ausgebildet, die sich bei Kontakt mit dem Untergrund (28) verkrallen soll. Sie kann dazu ein oder mehrere quer laufende Leisten oder Noppen aufweisen. Sie kann alternativ auch auf andere Weise als Haftfläche gestaltet sein, indem sie eine aufgerauhte Oberfläche, Haken, Lamellen oder dergleichen aufweist. Die Innen- und Außenseite (22,23) können auch mit für die jeweilige Funktion geeigneten Belägen oder Beschichtungen versehen sein.

Figur 1 bis 3 verdeutlichen die Funktion des Stütztellers (6). In der angehobenen Ruhestellung (29) ist der Stützteller (6) durch die Feder (16) an die Schwenkstütze (3) angeklappt. Er nimmt dabei mit seinem Boden (18) vorzugsweise eine im wesentlichen horizontale Lage ein. Wie Figur 1 und 2 verdeutlichen, befindet sich die Feder (16) hinter dem Tellerlager (15) und dem rückwärtigen (27) Ende der Führung (21). Die Feder (16) übt dadurch eine schräge Anstellkraft auf den Stützteller (6) aus, der dadurch auch mit seinem Anschlag (25) an der Vorderseite (24) zur Anlage an der Gleitkufe (10) gebracht wird. In der Ruhestellung (29) befindet sich der Lagerbolzen (20) am vorderen Ende der Führung (21).

Der Stützteller (6) behält beim Abdrehen der Schwenkstütze (3) die anfängliche Lage bei, bis er in Kontakt mit dem Untergrund (28) gerät. Er wird dann durch die Schwenkstützenbewegung gegen die Kraft der Feder (16) abgeklappt und mit dem Tellerboden (18) plan auf den Untergrund (28) gepresst. Hierbei gleitet die Schwenkstütze (3) mit der Gleitkufe (10) auf der Innenseite (22) des Tellerbodens (18) entlang, wobei sich der Lagerbolzen (20) nach hinten zur Rückseite (27) bewegt. Diese Auflagestellung (30) ist in Figur 1 in der mittleren Position gestrichelt dargestellt. Auch Figur 2 zeigt diese Auflagestellung (30) in gestrichelter Darstellung.

Bei einer weiteren Betätigung des Stützenantriebes (5) bleibt der Stützteller (6) durch die Anpresskraft der Schwenkstütze (3) und das Fahrzeuggewicht bei ausreichender Haftung am Untergrund (28) in seiner ursprünglichen Position liegen, wobei dann die Schwenkstütze (3) an der Innenseite (22) des Stütztellers (6) geführt entlanggleiten kann. Die Stützeinrichtung (1) nimmt dann die in Figur 3 gezeigte Hebestellung (31) ein, die auch in Figur 1 der Übersicht halber im unteren Teil des Bildes und unterhalb der Auflagestellung (30) dargestellt ist. Hieraus ist ersichtlich, dass sich bei der Gleitbewegung der Lagerbolzen (20) zum rückwärtigen Ende der Führung (21) bewegt. Der hierbei zur Verfügung stehende Gleitweg ist in Figur 1 und 3 mit "x" bezeichnet. Der Gleitweg wird über die Schwenkbewegung der Stütze (3) in einen Hebeweg "h" umgesetzt, um den der Fahrzeugboden (2) vom Untergrund (28) abgehoben wird. Figur 3 zeigt den Hebeweg "h" in der Realität. In Figur 1 ist der Hebeweg "h" nach unten verschoben dargestellt. Diese Darstellung verdeutlicht, dass bei normaler Haftfähigkeit des Untergrundes der Stützteller (6) hierbei keinen oder nur einen geringen axialen Verschiebeweg auf dem Untergrund (28) macht, und dass statt dessen die Schwenkstütze (3) im Stützteller (6) entlanggleitet.

Beim Einholen oder Deaktivieren der Stützeinrichtung (1) wird zunächst die Schwenkstütze (3) so weit zurück gedreht, bis sich nach Erschöpfung des Hebeweges "h" die Auflagestellung (30) ergibt. Bei der weiteren Drehbewegung wird dann der Stützteller (6) vom Untergrund (28) gelöst, wobei ihn die Feder (16) wieder in die Ausgangsstellung zurück zieht, wie sie in der Ruhestellung (29) dargestellt ist. Hierbei schwenkt der Stützteller (6) gleichzeitig und klappt wieder an die Schwenkstütze (3) an.

Abwandlungen der gezeigten Ausführungsform sind in verschiedener Weise möglich. Zum einen kann die Form des Stütztellers (6) in beliebig geeigneter Weise variieren. In der gezeigten Ausführungsform ist der Stützteller (6) im wesentlichen U-förmig mit einem horizontalen Tellerboden (18) und zwei aufrechten Seitenwänden (19) gestaltet. Durch entsprechende Vorder- und Rückwände kann er auch eine Wannenform erhalten. Auf diese Weise umgibt der Stützteller (6) außenseitig die Schwenkstütze (3). In dieser Ausführungsform kann der Stützteller (6) in Verbindung mit konventionellen Schwenkstützen (3) bzw. Stützeinrichtungen (1) eingesetzt werden und lässt sich auch nachrüsten. Bei einer anderen Ausführungsform kann der Stützteller (6) auch eine andere beliebig geeignete Form haben, wobei er z.B. nur eine vom Tellerboden (18) hochstehende zentrale Wand besitzt, die beidseitig von einer entsprechend geschlitzten Schwenkstütze (3) umgriffen wird. Ferner kann der Stützteller (6) auch nur einseitig an der Schwenkstütze (3) gelagert sein.

Variabel ist ferner die Ausgestaltung des Betätigungsorgans (16), welches den Stützteller (6) in einer bestimmbaren Weise zur Schwenkstütze (3) ausrichtet und positioniert. Es kann statt als Feder auch als Lenkeranordnung oder auf andere Weise konstruiert sein. Zudem kann es mehrteilig sein und auch in anderer Weise angeordnet sein, wobei es z.B. mit dem Fahrzeugboden (29 oder anderen Teile der Stützeinrichtung (1) verbunden ist.

Abwandlungen kann auch die Lagerung und Führung zwischen Stützteller (6) und Schwenkstütze (3) unterliegen. Sie kann z.B. als Kulissen- oder Schienenführung statt als Schlitzführung ausgebildet sein. Zudem können die Zuordnung und Kinematik der Führungsteile vertauscht oder in anderer Weise abgeändert sein, indem z.B. die Führung (21) an der Schwenkstütze (3) und der Lagerbolzen (20) am Stützteller (6) angeordnet sind. Die Führung (21) kann zudem Bestandteil der Gleitfläche (22) sein.

In der bevorzugten Ausführungsform bestehen die meisten Teile der Stützeinrichtung (1) aus Metall, z.B. aus verzinktem Stahlblech, wobei einzelne Teile, z.B. Antriebselemente, auch aus einem anderen Metall, z.B. Messing oder dergleichen bestehen können. Bei entsprechender Form- und Werkstofffestigkeit können auch andere Materialien, wie Kunststoff, etc. eingesetzt werden. Dabei sind auch Verbundmaterialien möglich, wobei insbesondere ein z.B. aus Stahlblech bestehender Stützteller (6) auf der Innenseite (22) eine reibungsarme Gleitfläche aus einer Kunststoffbeschichtung aufweist.

### BEZUGSZEICHENLISTE

- 1: Stützeinrichtung, Ausdrehstütze
- 2: Fahrzeugboden
- 3: Schwenkstütze
- 4: Strebe
- 5: Stützenantrieb, Spindeltrieb
- 6: Stützteller
- 7: Schwenklager
- 8: Gelenk, Gelenkbolzen
- 9: Unterseite
- 10: Gleitkufe
- 11: Spindel
- 12: Vierkant
- 13: Spindelmutter
- 14: Strebenlager
- 15: Tellerlager
- 16: Betätigungsorgan, Feder
- 17: Federanschluss
- 18: Tellerboden
- 19: Seitenwand
- 20: Lagerbolzen
- 21: Führung, Langloch
- 22: Innenseite, Gleitfläche
- 23: Aussenseite, Haftfläche
- 24: Vorderseite, Vorderwand
- 25: Anschlag, Bügel
- 26: Sporn
- 27: Rückseite
- 28: Untergrund
- 29: Ruhestellung
- 30: Auflagestellung
- 31: Hebestellung

- h: Hebeweg
- x: Schiebeweg

## Patentansprüche

1. Stützeinrichtung für Fahrzeuge, bestehend aus einer Schwenkstütze (3) und einem Stützenantrieb (5) zum Schwenken der Schwenkstütze (3), wobei an der Unterseite (9) der Schwenkstütze (3) ein Stützteller (6) beweglich angeordnet ist, **dadurch gekennzeichnet, dass** der Stützteller (6) mittels eines Tellerlagers (15) drehbar und verschieblich an der Schwenkstütze (3) geführt und gelagert ist, wobei der Stützteller (6) mindestens ein mit der Schwenkstütze (3) verbundenes Betätigungsorgan (16) zur Lagekontrolle aufweist.

2. Stützeinrichtung nach Anspruch 1, **dadurch gekennzeichnet, dass** das Betätigungsorgan (16) als Feder (16) ausgebildet ist.

3. Stützeinrichtung nach Anspruch 1 oder 2, **dadurch gekennzeichnet, dass** der Stützteller (6) einen Boden (18) aufweist, an dem sich die Schwenkstütze (3) gleitend abstützt, wobei der Boden (18) an der Aussenseite (23) eine haftgünstige Oberfläche und an der Innenseite (22) eine reibungsarme Oberfläche aufweist.

4. Stützeinrichtung nach einem der vorhergehenden Ansprüche, **dadurch gekennzeichnet, dass** der Stützteller (6) an der Vorderseite (24) einen Anschlag (25) für die Schwenkstütze (3) aufweist.

5. Stützeinrichtung nach einem der vorhergehenden Ansprüche, **dadurch gekennzeichnet, dass** die Schwenkstütze (3) an der Unterseite (9) eine gebogene Gleitkufe (10) aufweist.

6. Stützeinrichtung nach einem der vorhergehenden Ansprüche, **dadurch gekennzeichnet, dass** das Tellerlager (15) einen querverlaufenden Lagerbolzen (20) an der Schwenkstütze (3) aufweist, der am Stützteller (6) in einer im wesentlichen längs des Bodens (18) ausgerichteten Führung (21) drehbar und längsverschieblich geführt ist.

7. Stützeinrichtung nach Anspruch 2, **dadurch gekennzeichnet, dass** die Feder (16) als Zugfeder ausgebildet ist und mit dem Stützteller (6) über einen am rückwärtigen Ende der Führung (21) befindlichen stationären Federanschluss (17) verbunden ist.

8. Stützeinrichtung nach einem der vorhergehenden Ansprüche, **dadurch gekennzeichnet, dass** die Stützeinrichtung (1) eine mit dem Stützenantrieb (5) verbundene und über ein Gelenk (8) an die Schwenkstütze (3) angeschlossene Strebe (4) aufweist, wobei die Feder (16) stützenseitig am Gelenk (8) eingehängt ist.

9. Stützeinrichtung nach einem der vorhergehenden Ansprüche, **dadurch gekennzeichnet, dass** der Stützenantrieb (5) als Spindelantrieb mit manueller oder motorischer Betätigung ausgebildet ist.

## Claims

1. Supporting device for vehicles, comprising a pivoting support (3) and a support drive (5) for pivoting the pivoting support (3), a supporting plate (6) being arranged movably on the lower side (9) of the pivoting support (3), **characterized in that** the supporting plate (6) is guided and mounted rotatably and displaceably on the pivoting support (3) by means of a plate-type bearing (15), the supporting plate (6) having at least one actuating member (16) which is connected to the pivoting support (3) and is for checking the position.

2. Supporting device according to Claim 1, **characterized in that** the actuating member (16) is designed as a spring (16).

3. Supporting device according to Claim 1 or 2, **characterized in that** the supporting plate (6) has a base (18) on which the pivoting support (3) is supported in a sliding manner, the base (18) having a surface which is favourable for adhesion on the outside (23) and having a surface which is low in friction on the inside (22).

4. Supporting device according to one of the preceding claims, **characterized in that** the supporting plate (6) has on the front side (24) a stop (25) for the pivoting support (3).

5. Supporting device according to one of the preceding claims, **characterized in that** the pivoting support (3) has on the lower side (9) a bent sliding runner (10).

6. Supporting device according to one of the preceding claims, **characterized in that** the plate-type bearing (15) has, on the pivoting support (3), a bearing bolt (20) which runs transversely and is guided rotatably and longitudinally displaceably on the supporting plate (6), in a guide (21) aligned essentially along the base (18).

7. Supporting device according to Claim 2, **characterized in that** the spring (16) is designed as a tension spring and is connected to the supporting plate (6) via a stationary spring connection (17) situated at the rear end of the guide (21).

8. Supporting device according to one of the preceding claims, **characterized in that** the supporting device (1) has a strap (4) which is connected to the support drive (5) and is joined to the pivoting support (3) via a joint (8), the spring (16) being fitted to the joint (8) on the support side.

9. Supporting device according to one of the preceding claims, **characterized in that** the support drive (5) is designed as a spindle drive with manual or motor actuation.

## Revendications

1. Dispositif support pour véhicules, composé d'un support pivotant (3) et d'un mécanisme d'entraînement du support (5) pour faire pivoter le support pivotant (3), une coupelle support (6) étant disposée de manière mobile sur le dessous (9) du support pivotant (3), **caractérisé en ce que** la coupelle support (6) est guidée et logée sur le support pivotant (3) de manière à pouvoir tourner au moyen d'un palier de coupelle (15) et de manière à pouvoir coulisser, la coupelle support (6) présentant au moins un organe d'actionnement (16) destiné au contrôle du palier et relié au support pivotant (3).

2. Dispositif support selon la revendication 1, **caractérisé en ce que** l'organe d'actionnement (16) est réalisé sous la forme d'un ressort (16).

3. Dispositif support selon la revendication 1 ou 2, **caractérisé en ce que** la coupelle support (6) présente un fond (18) sur lequel le support pivotant (3) s'appuie de manière à pouvoir coulisser, le fond (18) présentant une surface favorisant l'adhérence sur le côté extérieur (23) et une surface à faible frottement sur le coté intérieur (22).

4. Dispositif support selon l'une des revendications précédentes, **caractérisé en ce que** la coupelle support (6) présente sur la face avant (24) une butée (25) pour le support pivotant (3).

5. Dispositif support selon l'une des revendications précédentes, **caractérisé en ce que** le support pivotant (3) présente un patin coudé (10) sur le côté inférieur (9).

6. Dispositif support selon l'une des revendications précédentes, **caractérisé en ce que** le palier de coupelle (15) présente un axe de palier (20) transversal sur le support pivotant (3), lequel est guidé sur la coupelle support (6) dans un guide (21) orienté pour l'essentiel le long du fond (18) de manière à pouvoir tourner et coulisser dans le sens longitudinal.

7. Dispositif support selon la revendication 2, **caractérisé en ce que** le ressort (16) est réalisé sous la forme d'un ressort de traction et il est relié avec la coupelle support (6) par le biais d'un raccord de ressort (17) fixe qui se trouve à l'extrémité arrière du guide (21).

8. Dispositif support selon l'une des revendications précédentes, **caractérisé en ce que** le dispositif support (1) présente une contrefiche (4) reliée au mécanisme d'entraînement du support (5) et raccordée au support pivotant (3) par le biais d'une articulation (8), le ressort (16) étant accroché à l'articulation (8) du côté du support.

9. Dispositif support selon l'une des revendications précédentes, **caractérisé en ce que** le mécanisme d'entraînement du support (5) est réalisé sous la forme d'un entraînement à broche à commande manuelle ou automatique.
